Europäisches Patentamt

European Patent Office

Office européen des brevets

(19)

(11) Veröffentlichungsnummer: **0 106 244 B1**

(12) **EUROPÄISCHE PATENTSCHRIFT**

(45) Veröffentlichungstag der Patentschrift: 04.06.86

(51) Int. Cl.⁴: **B 23 Q 5/40**

(21) Anmeldenummer: 83109797.7

(22) Anmeldetag: 30.09.83

(54) Linearbewegungsvorrichtung für Maschinen.

(30) Priorität: 02.10.82 DE 3236526

(43) Veröffentlichungstag der Anmeldung: 25.04.84 Patentblatt 84/17

(45) Bekanntmachung des Hinweises auf die Patenterteilung: 04.06.86 Patentblatt 86/23

(84) Benannte Vertragsstaaten: CH GB IT LI

(56) Entgegenhaltungen:
DE - A - 2 023 490
DE - A - 2 607 846
FR - A - 2 318 707

(73) Patentinhaber: Müller, Arnold, Klosterstrasse 48, D-7312 Kirchheim/Teck (DE)

(72) Erfinder: Stute, Gottfried, Prof. Dr.-Ing., Gosheimer Weg 15, D-7000 Stuttgart 75 (DE)
Erfinder: Wurst, Karl-Heinz, Dipl.-Ing., Nelkenstrasse 1, D-7015 Korntal-Münchingen 2 (DE)
Erfinder: Vogt, Günther, Dipl.-Ing., Danziger Strasse 9, D-7257 Ditzingen 1 (DE)

(74) Vertreter: Kratzsch, Volkhard, Dipl.-Ing., Mülbergerstrasse 65, D-7300 Esslingen (DE)

**Beschreibung**

Die Erfindung betrifft eine Vorrichtung gemäss dem Oberbegriff des Hauptanspruchs.

Bei Präzisionsmaschinen wie z.B. Werkzeugmaschinen treibt ein Gleichstrommotor ein Zwischengetriebe an. Dieses treibt eine Spindel an. Auf der Spindel sitzt eine Mutter, und diese nimmt ein Schlittensystem mit. Diese Vorrichtungsart hat folgende Nachteile:

a) Es sind an der Bewegung — abgesehen vom Schlitten — grosse Massen beteiligt: der Rotor des Motors, das Getriebe und die Spindel selbst. Bei Werkzeugmaschinen haben Spindeln Durchmesser von 5-10 cm. Es gibt aber auch 20 cm dicke Spindeln. Es müssen daher grosse Massen beschleunigt und abgebremst werden, was das System träge macht und Lager belastet.

b) Nur wenn die Spindel genügend steift ist, folgt sie auch genau den Drehbewegungen des Getriebes. Ist die Spindel nicht genügend steif, lässt die Präzision nach. Dies bedeutet, dass man relativ kurze Spindeln verwenden muss und dass deshalb der Weg des Arbeitsschlittens kurz bleiben muss.

c) Wenn eine Spindel rotiert, dann erzeugt sie auch Schwingungen. Diese Schwingungen belasten die Lager und mindern die Präzision. Man kann sich dabei eine solche Welle als schwingenden Stab vorstellen, der drei Schwingungsknoten hat. nämlich in den Lagerböcken und in der Spindelmutter. Da die Spindelstrecken je nach Stellung der Gewindespindel unterschiedlich lang sind, treten auch unterschiedliche Schwingungen auf. Es gibt auch von dieser Seite her Obergrenzen für die Drehgeschwindigkeit der Gewindespindeln. Auf den Strecken Lagerbock/Spindelmutter/Lagerbock hängt die Gewindespindel durch, und zwar je nach Stellung der Spindelmutter mehr oder weniger. Dieser unterschiedliche Durchhang muss konstruktiv berücksichtigt werden. Er führt ausserdem auch dazu, dass die Gewindespindel nicht ganz exakt axial in die Spindelmutter einläuft.

d) In allen Schwingungsknoten wird die Gewindespindel auch auf Knickung beansprucht. Dies gilt auch für die zwischen Antriebsmotor und darauf folgendem Lagerbock liegenden Knoten.

e) Nicht nur die Lagerböcke sind nachgebig. Vielmehr müssen auch die Lager in den Lagerböcken ein gewisses axiales Spiel haben. Deshalb und aus anderen Gründen hat man Probleme, den Antriebsmotor mit seiner rotatorischen Bewegung starr mit der linearen Bewegung des Arbeitsschlittens zu koppeln.

Aufgabe der Erfindung ist es, eine Vorrichtung der eingangs genannten Art anzugeben, die die oben bezeichneten Nachteile beseitigt.

Erfindungsgemäss wird dies durch die aus dem kennzeichnenden Teil des Hauptanspruchs ersichtlichen Merkmale gelöst.

Diese Lösung hat u.a. folgende Vorteile:

a) Da jetzt die Gewindespindel ganz wesentlich steifer als früher ist, braucht man nicht mehr soviel Gewindespindeln auf Lager zu halten.

Dass die Lagerhaltung mit eine Funktion der Steifigkeit ist, sieht man daran, dass bei unendlich steifer Gewindespindel nur ein einziger Typ auf Lager gehalten werden müsste.

b) Die Spindellänge und damit die Fahrlänge des Arbeitsschlittens kann wesentlich länger sein.

c) Die Vorrichtung wird wesentlich leichter, da man nun auch mit dünneren Gewindespindeln auskommen kann.

d) Die Konstruktion wird wesentlich billiger, denn es entfallen die Lager in den Lagerböcken.

e) Wegen wesentlich weniger rotorisch bewegter Masse ist die Vorrichtung wesentlich trägheitsärmer.

f) Zur Steifigkeit trägt auch die Torsionssteifigkeit der Gewindespindel doppelt bei, weil ja nun beide Enden fest eingespannt sind.

g) Unabhängig von der Lage der Spindelmutter auf der Gewindespindel hat man immer das gleiche Ansprechverhalten, während ja im Stand der Technik der Torsionswinkel umso grösser ist, je weiter sich die Spindelmutter vom Antriebsmotor entfernt befindet.

h) Die kritischen Drehzahlen, die die Verschiebegeschwindigkeit des Arbeitsschlittens massgeblich mitbestimmen, liegen nunmehr in einem nicht mehr interessierenden hohen Bereich.

i) Die erreichbare Auflösung kann sehr hoch sein. Die Steigung der Gewindespindel kann grössenordnungsmässig 5-10 mm je Umdrehung sein. Durch bekannte, vom Anmelder bereits entwickelte Vorrichtungen kann die Auflösung 1/10 000 Umdrehung sein, und dies bedeutet, dass typischerweise die kleinste Auflösung am Arbeitsschlitten etwa 0,5 Mikrometer ist.

j) Der Unterschied in der Spindelsteifigkeit liegt mindestens beim Faktor 2. Dies bedeutet, dass man bei gleicher Spindellänge halb so dünne Spindeln nehmen kann oder bei gleicher Spindelstärke doppelt so lange Spindellängen realisieren kann.

k) Der Fluchtungsfehler zwischen der geometrischen Mittenachse der Gewindespindel und der Spindelmutter kann praktisch vernachlässigt werden.

Durch die Merkmale des Anspruchs 2 erhält man Werte, durch die die Erfindung voll ausgenützt werden kann. Dabei gilt die Untergrenze mehr für gerollte Gewindespindeln, und die Obergrenze gilt mehr für geschliffene Gewindespindeln. Man ist mit solchen Bemessungen in der Lage, Adhäsionsrucke weitgehend auszuschalten, die bei kleinen Bewegungen ja eine Rolle spielen.

Durch die Merkmale des Anspruchs 3 vermeidet man jedes Zwischengetriebe zwischen Rotor und Spindelmutter.

Motoren gemäss den Ansprüchen 4 und 5 haben sich bei Prototypen sehr bewährt. Zum Beispiel hat der Asynchron-Motor keine inneren Wicklungen.

Durch die Merkmale des Anspruchs 6 bestimmt die Spindelmutter die Länge in diesem Bereich.

Durch die Merkmale des Anspruchs 7 erhält man leichter zu beherrschende, symmetrische Verhältnisse.

Durch die Merkmale des Anspruchs 8 nützt man den Platz zwischen dem Antriebsmotor und Teilen der Mitnahmevorrichtung aus.

Durch die Merkmale des Anspruchs 9 vermeidet man die Nachteile der an sich ebenfalls möglichen fliegenden Lagerung der Spindelmutter.

Durch die Merkmale des Anspruchs 10 erhält man eine sehr einfache Verbindung, und zudem trägt der Rotor auch noch zur Steifigkeit der Spindelmutter bei.

An dieser Stelle sei darauf hingewiesen, dass unter «Spindelmutter» nicht eine einstückige Mutter verstanden wird. Vielmehr wird hierunter eine Vorrichtung gemäss dem seitherigen, üblichen Aufbau verstanden, die zumindest zwei Spindelmutterhälften umfasst, welche zwecks Spielausgleichs gegeneinander federverspannt sind und ihrerseits in einer Hülse sitzen.

Bei Anwendungsfällen, in denen es auf die Präzision nicht so sehr ankommt, kann die Spindelmutter allerdings ein einstückiger Teil sein.

Die Erfindung wird nunmehr anhand eines bevorzugten Ausführungsbeispiels beschrieben.

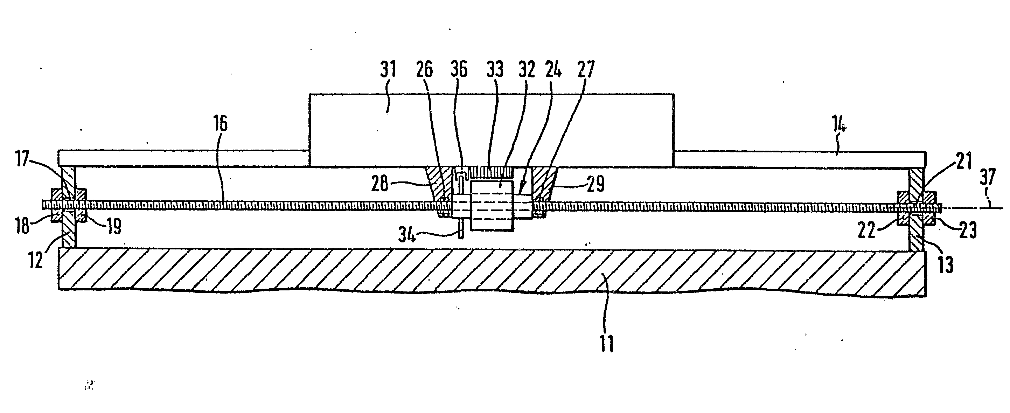

Die einzige Figur zeigt eine schematische Seitenansicht der Erfindung, die für das Verständnis des Durchschnittsfachmanns ausreichend ist.

Ein Bett 11 hat zwei Lagerböcke 12, 13, die an ihrem einen Ende fest mit dem Bett 11 verbunden sind. Das andere Ende der Lagerböcke 12, 13 ist ebenso fest mit einer Schlittenführung 14 verbunden. Das Bett 11, die Lagerböcke 12, 13 und die Schlittenführung 14 bilden zusammen einen steifen Rahmen.

Eine Gewindespindel 16 durchquert mit ihrem einen Endbereich 17 den Lagerbock 12 in einer entsprechenden Ausnehmung und ist dort fest eingespannt, was durch die beiden, beidseitig vom Lagerbock 12 angeordneten Muttern 18, 19 symbolisiert wird. Der andere Endbereich 21 ist am Lagerbock 13 befestigt, was ebenfalls durch Muttern 22, 23 dargestellt wird. Durch die Muttern 18, 23 ist die Gewindespindel 16 in dem oben definierten Rahmen unter erheblichem Zug vorgespannt, etwa wie eine Saite in einer Harfe. Auf der Gewindespindel 16 sitzt eine Spindelmuttervorrichtung 24, die in nicht dargestellter Weise zwei gegeneinander verspannte Mutterhälften und eine diese umgreifende Hülse umfasst. Die Hülse ist in der Figur sichtbar. Die Spindelmuttervorrichtung 24 kann sich auf der Gewindespindel 16 links oder rechts herum drehen. An ihrem linken Ende ist sie durch ein Lager 26 und an ihrem rechten Ende durch ein Lager 27 ohne axiales Spiel geführt. Das Lager 26 und das Lager 27 befindet sich in Lagerschilden 28, 29, die von der Gewindespindel 16 durchquert werden. Während der eine Endbereich der Lagerschilde 28, 29 die Spindelmuttervorrichtung 24 fasst, ist der andere Endbereich starr mit einem Arbeitsschlitten 31 verbunden. Dieser Arbeitsschlitten 31 wird an der Schlittenführung 14 geführt. Der Arbeitsschlitten 31 trägt z.B. ein zu bearbeitendes Werkstück oder aber ein Werkzeug, wie Schleifscheibe, Reibahle, Bohrer od. dgl.

Auf die Hülse der Spindelmuttervorrichtung 24 ist ein Rotor 32 eines Elektromotors aufgeschrumpft. Der Stator 33 ist starr am Arbeitsschlitten 31 befestigt.

Im Raum des aus Rotor 32 und Stator 33 bestehenden Elektromotors einerseits und dem Lagerschild 28 andererseits ist auf dem linken Bereich der Spindelmuttervorrichtung 24 eine Kodierscheibe 34 drehfest vorgesehen. Diese trägt Strichmarkierungen ähnlich der aus der Beugungsoptik bekannten Strichgitter. Der Lage der Striche wird von einem Sensor 36 gelesen, der fest mit dem Arbeitsschlitten 31 verbunden ist. Die Stromzuführung zum Sensor 36 als auch zum Stator 33 erfolgt über am Arbeitsschlitten 31 befestigte Kabel.

Koaxial zur geometrischen Längsachse 37 sind die Gewindespindel 26, die Spindelmuttervorrichtung 24, der Rotor 32, der Stator 33, die Lager 26, 27 und die Kodierscheibe 34.

Je nachdem, ob der Rotor 32 rechts drehend oder links drehend angesteuert ist, bewegt sich der Arbeitsschlitten 31 in die eine oder andere Richtung. Der Abstand der Lagerschilde 28, 29 ist nicht grösser als bei bekannten Vorrichtungen, bei denen die Spindelmuttervorrichtung 24 feststeht aber die Gewindespindel 16 nicht vorgespannt rotiert. Der von den Lagerschilden 28, 29 umgebene Bauteileraum ist in mechanischer Hinsicht für praktische Verhältnisse ideal steif.

Bei vielen Konstruktionen wird es nicht notwendig sein, die Lagerböcke 12, 13 mit der Schlittenführung 14 zu verbinden, sofern die Lagerböcke 12, 13 ausreichend steif sind.

Ein Bett 11 ausreichender Steifigkeit ist aus anderen Gründen stets vorhanden.

## Patentansprüche

1. Vorrichtung zur Erzeugung von hin- und hergehenden Linearbewegungen bei Maschinen wie Fertigungseinrichtung, insbesondere Werkzeugmaschinen, mit einem steifen Bett,
mit zwei im Abstand angeordneten, parallelen, gleichsinnig vom Bett weg ragenden steifen Lagerböcken,
mit einer Gewindespindel, deren beide Enden je in einem Lagerbock im Abstand vom Bett gehalten sind,
mit einem rechts und links drehenden elektrischen Antriebsmotor, der einen Stator und einen Rotor aufweist,
mit einer die Winkellage des Rotors erkennenden Messvorrichtung,
mit einer auf der Gewindespindel sitzenden Spindelmutter, die im Bereich zwischen den Lagerböcken bewegbar ist,
mit einer Mitnahmevorrichtung, die von der Spindelmutter axial spielfrei mitgenommen wird,
mit einem Arbeitsschlitten, an dem die Mitnahmevorrichtung angreift und mit einer Führungsvorrichtung, die den Arbeitsschlitten führt,
gekennzeichnet durch folgende Merkmale:

a) Die Gewindespindel (16) ist auf Zug belastet undrehbar zwischen den Lagerböcken (12, 13) eingespannt.

b) Die Spindelmutter (24) ist drehbar an der Mitnahmevorrichtung (28, 29) gelagert.

c) Der Rotor (32) ist drehfest mit der Spindelmutter (24) verbunden und koaxial zur Längsachse (37) der Gewindespindel (16) angeordnet.

d) Der Stator (33) ist starr mit dem Arbeitsschlitten (31) verbunden.

2. Vorrichtung nach Anspruch 1, dadurch gekennzeichnet, dass bei üblichem Spindelmaterial für Werkzeugmaschinen die Zugbelastung zwischen 5-50%, vorzugsweise zwischen 10-40%, insbesondere bei 20%, der für die Bewegung des Arbeitsschlittens notwendigen Kraft liegt.

3. Vorrichtung nach Anspruch 1, dadurch gekennzeichnet, dass die Spindelmutter (24) drehfest im Rotor (32) vorgesehen ist.

4. Vorrichtung nach Anspruch 1, dadurch gekennzeichnet, dass der Antriebsmotor (32, 33) ein Synchronmotor ist.

5. Vorrichtung nach Anspruch 1, dadurch gekennzeichnet, dass der Anstriebsmotor (32, 33) ein Käfigläufer-Asynchronmotor ist.

6. Vorrichtung nach Anspruch 1, dadurch gekennzeichnet, dass der Antriebsmotor (32, 33) axial kürzer als die Spindelmutter (24) ist.

7. Vorrichtung nach Anspruch 1, dadurch gekennzeichnet, dass der Rotor (32) in bezug auf seine Längserstreckung mittig auf der Spindelmutter (24) sitzt.

8. Vorrichtung nach Anspruch 1, dadurch gekennzeichnet, dass auf der Spindelmutter (24) eine Geberscheibe (34) der Messvorrichtung (34, 36) sitzt und dass der zugehörige Aufnehmer (36) Arbeitsschlitten-fest vorgesehen ist.

9. Vorrichtung nach Anspruch 1, dadurch gekennzeichnet, dass die Mitnahmevorrichtung zwei im Abstand angeordnete Lagerwangen (28, 29) umfasst, die zwischen sich die Spindelmutter (24) lagern.

10. Vorrichtung nach Anspruch 1, dadurch gekennzeichnet, dass der Rotor (32) auf die Spindelmutter (24) aufgeschrumpft ist.

## Claims

1. Device for generating reciprocating linear movements in machines such as manufacturing equipment, especially machine tools,
having a rigid bed,
having two rigid parallel bearing blocks arranged with spacing and extending in the same direction away from the bed,
having a threaded spindle, the two ends of which are held each in a bearing block spaced from the bed,
having an electric drive motor rotating to right and left, which comprises a stator and a rotor,
having a measuring device recognising the angular position of the rotor,
having a spindle nut seated on the threaded spindle and movable in the range between the bearing blocks,
having an entraining device which is entrained by the spindle nut in axially play-free manner,
having a work carriage on which the entraining device acts and
having a guide device which guides the work carriage,
characterised by the following features:
a) the threaded spindle (16) is clamped in under tension stress non-rotatably between the bearing blocks (12, 13),
b) the spindle nut (24) is mounted rotatably on the entraining device (28, 29),
c) the rotor (32) is connected unrotatably with the spindle nut (24) and arranged coaxially with the longitudinal axis (37) of the threaded spindle (16),
d) the stator (33) is rigidly connected with the work carriage (31).

2. Device according to claim 1, characterised in that in the case of ordinary spindle material for machine tools the tension loading lies between 5-50%, preferably between 10-40%, especially at 20%, of the force necessary for the movement of the work carriage.

3. Device according to claim 1, characterised in that the spindle nut (24) is provided unrotatably in the rotor (32).

4. Device according to claim 1, characterised in that the drive motor (32, 33) is a synchronous motor.

5. Device according to claim 1, characterised in that the drive motor (32, 33) is a cage rotor asynchronous motor.

6. Device according to claim 1, characterised in that the drive motor (32, 33) is axially shorter than the spindle nut (24).

7. Device according to claim 1, characterised in that the rotor (32) is seated on the spindle nut (24) centrally in relation to its longitudinal extent.

8. Device according to claim 1, characterised in that an emitter disc (34) of the measuring device (34, 36) is seated on the spindle nut (24) and in that the pertinent receiver (36) is provided fast with the work carriage.

9. Device according to claim 1, characterised in that the entraining device comprises two bearing side pieces (28, 29) arranged with spacing, which mount the spindle nut (24) between them.

10. Device according to claim 1, characterised in that the rotor (32) is shrunk on to the spindle nut (24).

## Revendications

1. Commande de déplacement linéaire pour produire des mouvements de translation dans les deux sens dans des machines telles que les machines employées pour la fabrication d'objets et notamment dans les machines-outils, avec un banc rigide (11), deux supports (12, (13) rigides et parallèles disposés du même côté du banc (11) à une certaine distance l'un de l'autre, une vis d'avance (16) dont les deux extrémités sont maintenues chacune dans un support (12), (13) à une certaine distance du banc (11), un moteur électrique d'entraînement tournant dans les deux sens et comprenant un stator (33) et un rotor (32), un dispositif de mesure (34, 36) déterminant la position angulaire du rotor (32), un écrou d'entraînement (24) en prise avec la vis d'avance (16) et pouvant être déplacé dans la zone comprise entre les supports (12), (13), un dispositif d'entraînement (28, 29) entraîné sans jeu axial par l'écrou d'entraînement (24), un chariot de travail (31) solidaire du dispositif d'entraînement (28, 29), et un dispositif de guidage (14) qui guide le chariot de travail (31), caractérisé en ce que la vis d'avance (16) est mise en tension entre les supports (12), (13) dans lesquels est fixée de façon non tournante, que l'écrou d'entraînement (24) est monté tournant dans le dispositif d'entraînement (28, 29), que le rotor (32) est solidaire de l'écrou d'entraînement (24) en rotation et disposé concentriquement à l'axe (37) de la vis d'avance (16), et que le stator (33) est lié rigidement au chariot de travail (31).

2. Dispositif selon la revendication 1, caractérisé en ce que, dans le cas d'un matériau courant pour les vis d'avance de machines-outils, l'effort de traction préalable exercé sur la vis d'avance est de 5 à 50%, de préférence 10 à 40% et notamment 20%, de la force nécessaire pour déplacer le chariot de travail.

3. Dispositif selon la revendication 1, caractérisé en ce que l'écrou d'entraînement (24) est monté non tournant dans le rotor (32).

4. Dispositif selon la revendication 1, caractérisé en ce que le moter d'entraînement (32, 33) est un moteur synchrone.

5. Dispositif selon la revendication 1, caractérisé en ce que le moteur d'entraînement (32, 33) est un moteur asynchrone à rotor à cage d'écureuil.

6. Dispositif selon la revendication 1, caractérisé en ce que le moteur d'entraînement (32, 33) est plus court que l'écrou d'entraînement (24) dans la direction axiale.

7. Dispositif selon la revendication 1, caractérisé en ce que le milieu de la longueur du rotor (32) est disposé au milieu de la longueur de l'écrou d'entraînement (24).

8. Dispositif selon la revendication 1, caractérisé en ce qu'un disque de position angulaire (34) du dispositif de mesure (34, 36) est monté sur l'écrou d'entraînement (24) et que le détecteur associé (36) est fixé au chariot de travail.

9. Dispositif selon la revendication 1, caractérisé en ce que le dispositif d'entraînement comprend deux joues formant support (28, 29) disposées à une certaine distance l'une de l'autre, entre lesquelles l'écrou d'entraînement (24) est monté.

10. Dispositif selon la revendication 1, caractérisé en ce que le rotor (32) est fretté sur l'écrou d'entraînement (24).